# EUROPEAN PATENT APPLICATION

(11) **EP 4 685 933 A1**
(43) Date of publication of application: **28.01.2026**
(21) Application number: 24897934.6
(22) Date of filing: 05.11.2024
(51) Int. Cl.: H01M 10/658, H01M 50/284, H01M 10/659, H01M 10/625, H01M 50/24, H01M 10/42

(54) **BATTERY PACK**

(30) Priority: 27.11.2023 KR 20230167311
(71) Applicant: LG Energy Solution, Ltd., Seoul 07335 (KR)
(72) Inventor: KIM, Jae-Sang, Daejeon 34122 (KR); CHOI, Jun-Young, Daejeon 34122 (KR); LEE, Young-Kyu, Daejeon 34122 (KR)
(74) Representative: Plasseraud IP
(86) International application number: PCT/KR2024/017297
(87) International publication number: WO 2025/116337

(57) **Abstract**

Disclosed is a battery pack. The battery pack includes a case having an open lower portion and providing an inner space; a bottom cover coupled to the lower portion of the case; a PCB accommodated within the case and positioned on the bottom cover; and a plurality of battery cells accommodated within the case and positioned on the PCB.

## Description

### TECHNICAL FIELD

The present disclosure relates to a battery pack.

This application is based on and claims priority from Korean Patent Application No. 10-2023-0167311, filed on November 27, 2023, with the Korean Intellectual Property Office, the disclosure of which is incorporated herein in its entirety by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric scooters, electric vehicles and energy storage systems (ESSs) for driving and storing energy, as well as in small devices such as portable electronic devices. A plurality of secondary batteries may be electrically connected to form a single battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery pack or module, but may also cause fire or explosion in other battery modules.

Moreover, in the case of medium to large-sized battery packs such as electric scooters or electric vehicles, a large number of battery cells or battery modules are included to increase output and/or capacity, so the risk of thermal chain reaction may increase further. In particular, the battery packs applied to electric scooters may be configured to be replaceable as battery pack units. For example, a battery pack that needs to be charged may be separated from the electric scooter, and another battery pack that has been fully charged may be mounted on the scooter. At this time, the separated battery pack may be exposed to external impact or flame. At this time, a structure is required to prevent a thermal event from occurring from the battery pack or to delay the occurrence of a thermal event.

### DISCLOSURE

### Technical Problem

The present disclosure is designed to solve these and other problems.

The present disclosure is directed to providing a battery pack including a structure capable of blocking or delaying external heat from being transferred to battery cells.

### Technical Solution

In one aspect of the present disclosure, there is provided a battery pack comprising: a case having an open lower portion and providing an inner space; a bottom cover coupled to the lower portion of the case; a PCB accommodated within the case and positioned on the bottom cover; and a plurality of battery cells accommodated within the case and positioned on the PCB.

In addition, the bottom cover may contain a PBT material or glass fiber material.

In addition, the battery pack may further comprise a main frame accommodated within the case and positioned on the PCB.

In addition, the plurality of battery cells may be mounted to the main frame.

In addition, the battery pack may further comprise a phase change material that fills an inside of the main frame.

In addition, the phase change material may contain paraffin.

In addition, the battery pack may further comprise a barrier configured to cover the PCB.

In addition, the barrier may surround the PCB entirely.

In addition, the barrier may contain a PBT material or glass fiber material.

In addition, the barrier may include an upper barrier located between the plurality of battery cells and the PCB to cover an upper surface of the PCB.

In addition, the barrier may include a lower barrier located between the bottom cover and the PCB to cover a lower surface of the PCB.

In addition, the battery pack may further comprise a BMS provided on the PCB and electrically connected to the plurality of battery cells.

In another aspect of the present disclosure, there is also provided a transportation means comprising the battery pack of the present disclosure.

### Advantageous Effects

According to at least one of the embodiments of the present disclosure, it is possible to improve thermal stability of a battery pack.

According to at least one of the embodiments of the present disclosure, a thermal event of a battery pack due to an external impact or flame may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a drawing showing the battery pack of FIG. 1 in which some components are exploded.
FIG. 3 is a drawing showing some components of the battery pack of FIG. 1.
FIG. 4 is a drawing showing the battery pack of FIG. 3 in which some components are exploded.
FIG. 5 is a drawing showing a cell module assembly of the battery pack according to an embodiment of the present disclosure.
FIG. 6 is a drawing showing the cell module assembly of FIG. 5 in which some components are exploded.
FIG. 7 is a drawing showing some components of the cell module assembly of FIG. 5.
FIG. 8 is a drawing showing the cell module assembly of FIG. 7 in which some components are exploded.
FIGS. 9 and 10 are drawings showing the cell module assembly of FIG. 8 in which some components are exploded.
FIG. 11 is a partial cross-sectional view, taken along the line B-B' of FIG. 7.
FIG. 12 is a diagram showing a controller of the battery pack according to an embodiment of the present disclosure.
FIG. 13 is a drawing showing the controller of FIG. 12 in in which some components are exploded.
FIG. 14 is a partial cross-sectional view, taken along the line C-C' of FIG. 12.
FIG. 15 is a partial cross-sectional view, taken along the line A-A' of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

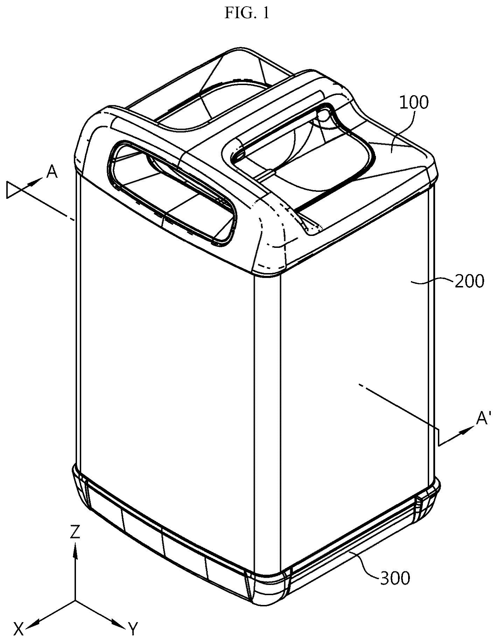

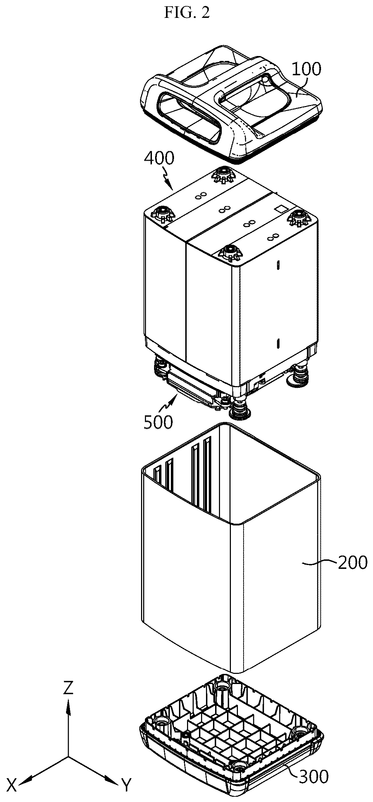

FIG. 1 is a diagram showing a battery pack according to an embodiment of the present disclosure. FIG. 2 is a drawing showing the battery pack of FIG. 1 in which some components are exploded. Referring to FIGS. 1 and 2, the battery pack according to an embodiment of the present disclosure may include a case 200, a bottom cover 300, a PCB 520, and a battery cell 430.

The case 200 may have an open lower portion and provide an inner space. Also, the case 200 may have an open upper portion. The case 200 may have a rectangular parallelepiped shape. The case 200 may contain a metal material. For example, the case 200 may contain aluminum. The case 200 may have a shape in which the upper surface and the lower surface of the rectangular parallelepiped shape are open.

The bottom cover 300 may be coupled, fastened, fixed or attached to the lower portion or the lower surface of the case 200. The bottom cover 300 may cover the open portion of the case 200.

The PCB 520 may be accommodated in the inner space of the case 200. The PCB 520 may be positioned on the bottom cover 300. The PCB 520 may have a plate shape. Also, the PCB 520 may face the bottom cover 300.

The battery cell 430 may be provided in plurality. At this time, the battery cell 430 may mean a secondary battery. The battery cell 430 may have a cylindrical shape. The plurality of battery cells 430 may be accommodated within the case 200. The plurality of battery cells 430 may be located on the PCB 520.

According to this configuration of the present disclosure, the plurality of battery cells 430 may be protected by the PCB 520 and the bottom cover 300. For example, when the battery pack is exposed to an external flame, the bottom cover 300 and the PCB 520 may block or delay the battery cells 430 from being exposed to the flame or heat. As a result, the thermal safety of the battery pack may be improved.

Referring to FIGS. 1 and 2, the bottom cover 300 of the battery pack according to an embodiment of the present disclosure may contain a PBT (Polybutylene Terephthalate) material. The PBT material may have strong durability against heat. In addition, the bottom cover 300 may contain a glass fiber material. The glass fiber material may have strong durability against heat.

According to this configuration of the present disclosure, the flame resistance of the bottom cover 300 may be improved. As a result, the thermal safety of the battery pack may be improved.

Referring to FIGS. 1 and 2, the battery pack according to an embodiment of the present disclosure may include a top cover 100. The top cover 100 may be coupled, fastened, fixed, or attached to the upper portion or the upper surface of the case 200. The top cover 100 may cover the open portion of the case 200.

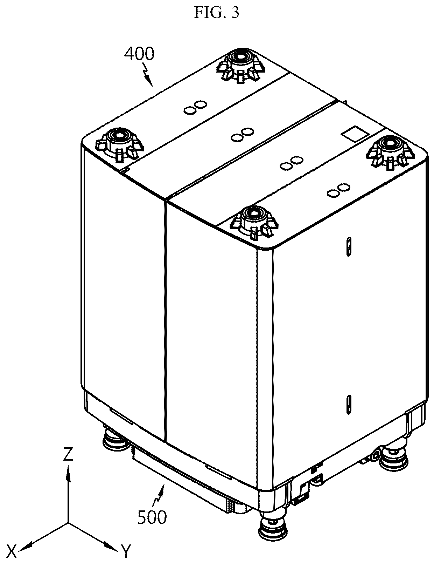

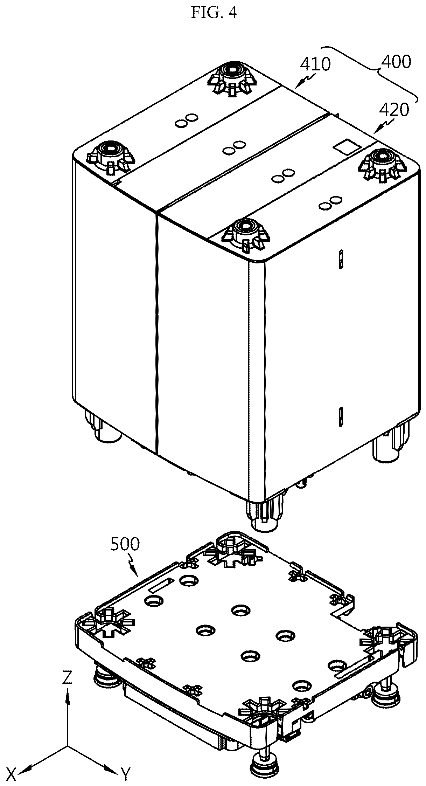

FIG. 3 is a drawing showing some components of the battery pack of FIG. 1. FIG. 4 is a drawing showing the battery pack of FIG. 3 in which some components are exploded.

Referring to FIGS. 3 and 4, the battery pack according to an embodiment of the present disclosure may include a cell module assembly 400 and a controller 500. The cell module assembly 400 may include the plurality of battery cells 430. The cell module assembly 400 may be accommodated within the case 200.

The controller 500 may include the PCB 520. The controller 500 may be accommodated within the case 200. The controller 500 may be positioned beneath the cell module assembly 400. Alternatively, the controller 500 may be coupled, fastened, fixed or attached to the lower surface or the lower portion of the cell module assembly 400. The controller 500 may monitor the state of the plurality of battery cells 430. Also, the controller 500 may control charging and discharging of the plurality of battery cells 430.

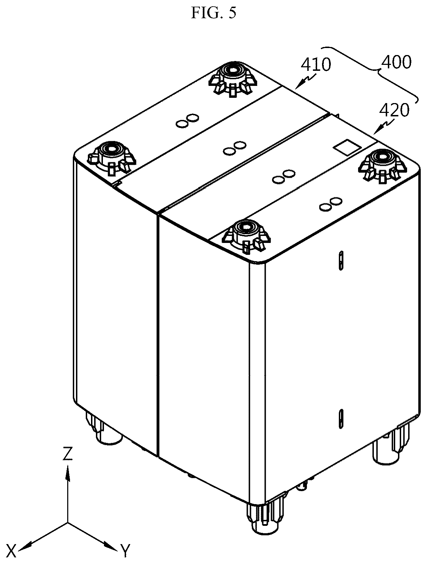

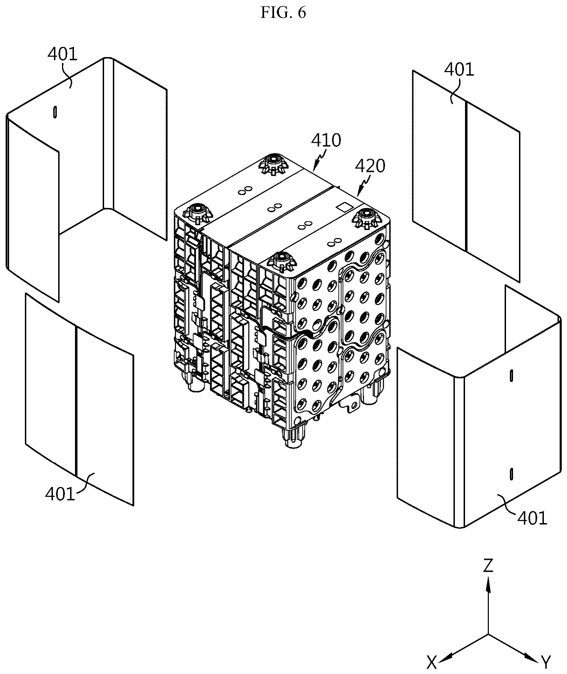

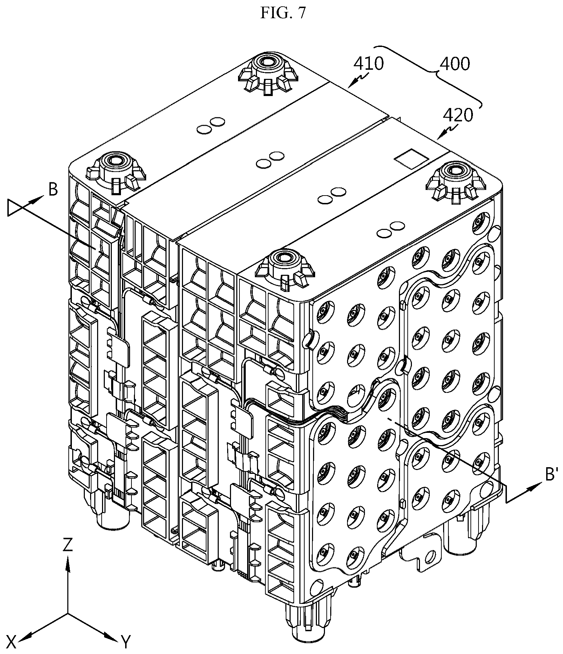

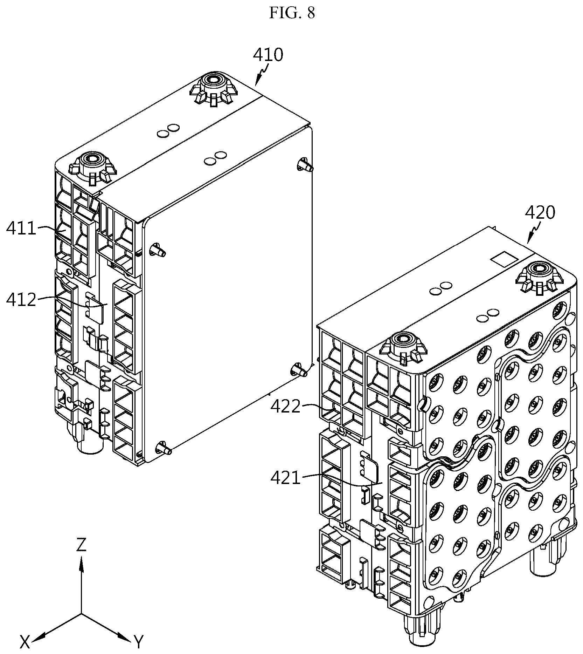

FIG. 5 is a drawing showing a cell module assembly 400 of the battery pack according to an embodiment of the present disclosure. FIG. 6 is a drawing showing the cell module assembly 400 of FIG. 5 in which some components are exploded. FIG. 7 is a drawing showing some components of the cell module assembly 400 of FIG. 5. FIG. 8 is a drawing showing the cell module assembly 400 of FIG. 7 in which some components are exploded.

Referring to FIGS. 5 to 8, the cell module assembly 400 according to an embodiment of the present disclosure may have a rectangular parallelepiped shape. The cell module assembly 400 may include a first sub assembly 410 and a second sub assembly 420. The first sub assembly 410 and the second sub assembly 420 may include a plurality of battery cells 430, respectively. The first sub assembly 410 and the second sub assembly 420 may be arranged, aligned, or positioned in the left and right direction or the Y-axis direction.

The first sub assembly 410 and the second sub assembly 420 may be fastened, coupled, or fixed to each other. The first sub assembly 410 and the second sub assembly 420 may be physically or electrically connected.

The cell module assembly 400 may contain an insulating cover 401. The insulating cover 401 may cover the outer surface of the cell module assembly 400. Alternatively, the insulating cover 401 may cover the outer surface of the first sub assembly 410 and the second sub assembly 420. The insulating cover 401 may electrically insulate the first sub assembly 410 and the second sub assembly 420 from the case 200.

The first sub assembly 410 may include a first outer frame 411 and a first inner frame 412. The first outer frame 411 and the first inner frame 412 may be arranged, aligned, or positioned in the left and right direction or the Y-axis direction. The first outer frame 411 and the first inner frame 412 may be fastened, coupled, or fixed to each other. The first outer frame 411 and the first inner frame 412 may form an outer appearance of the first sub assembly 410.

The second sub assembly 420 may include a second outer frame 421 and a second inner frame 422. The second outer frame 421 and the second inner frame 422 may be arranged, aligned, or positioned in the left and right direction or the Y-axis direction. The second outer frame 421 and the second inner frame 422 may be fastened, coupled, or fixed to each other. The second outer frame 421 and the second inner frame 422 may form an outer appearance of the second sub assembly 420.

The first inner frame 412 and the second inner frame 422 may be arranged, aligned, or positioned in the left and right direction or the Y-axis direction. The first inner frame 412 and the second inner frame 422 may be fastened, coupled, or fixed to each other.

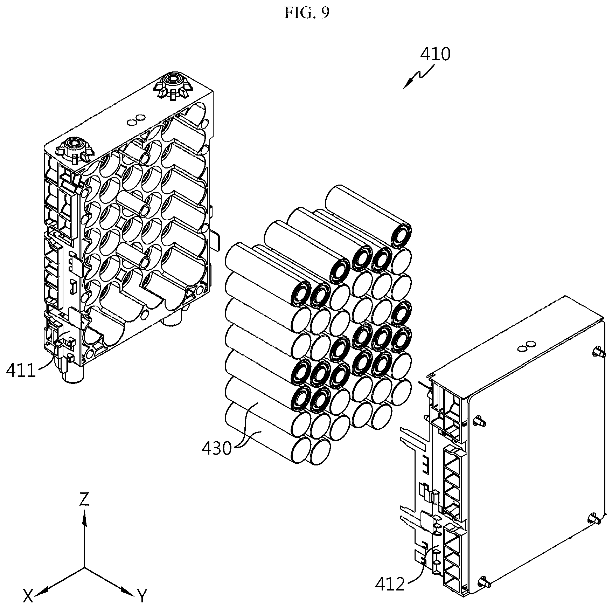

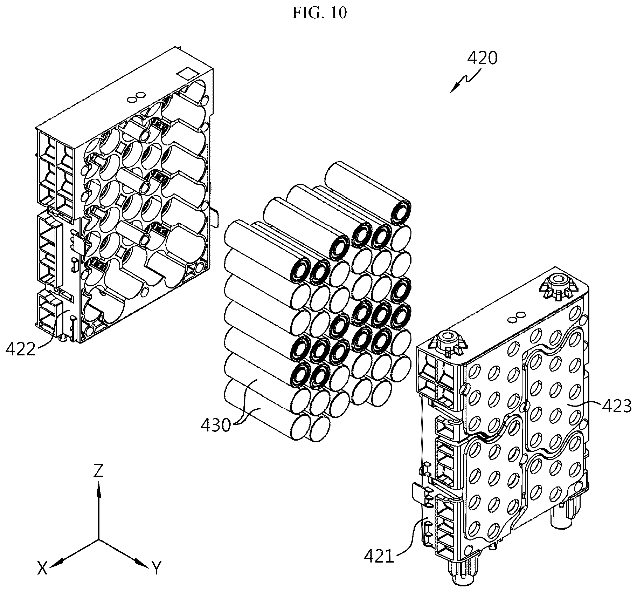

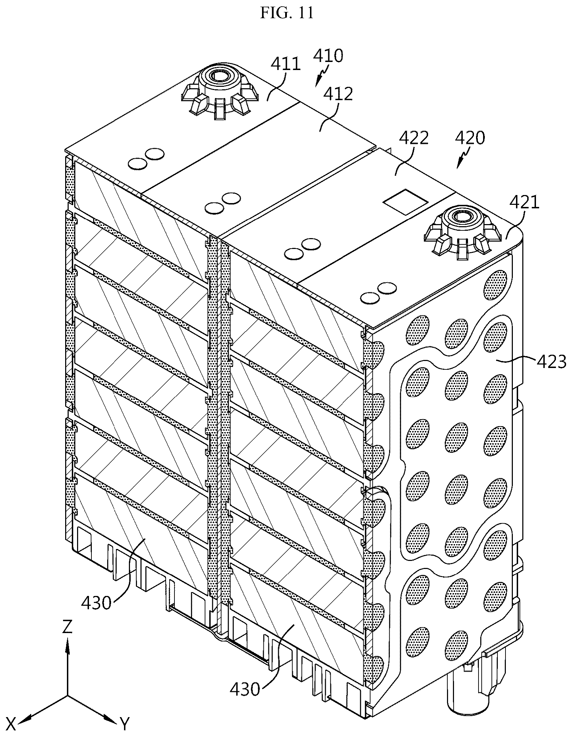

FIGS. 9 and 10 are drawings showing the cell module assembly 400 of FIG. 8 in which some components are exploded. FIG. 11 is a partial cross-sectional view, taken along the line B-B' of FIG. 7. Referring to FIGS. 8 to 11, the battery pack according to an embodiment of the present disclosure may include a main frame.

The main frame may be used as a general term that calls the first outer frame 411, the first inner frame 412, the second inner frame 422, and the second outer frame 421. The main frame may form the outer appearance of the cell module assembly 400. The main frame may be accommodated within the case 200 and positioned on the PCB 520.

The plurality of battery cells 430 may be mounted to the main frame. At least a portion of the plurality of battery cells 430 may be accommodated in the first outer frame 411 and the first inner frame 412. The plurality of battery cells 430 may extend in the left and right direction or the Y-axis direction. A left portion of the plurality of battery cells 430 may be accommodated in the first outer frame 411. A right portion of the plurality of battery cells 430 may be accommodated in the first inner frame 412.

Also, at least a portion of the plurality of battery cells 430 may be accommodated in the second outer frame 421 and the second inner frame 422. The plurality of battery cells 430 may extend in the left and right direction or the Y-axis direction. A left portion of the plurality of battery cells 430 may be accommodated in the second inner frame 422. A right portion of the plurality of battery cells 430 may be accommodated in the second outer frame 421.

According to this configuration of the present disclosure, the thermal safety of the battery pack may be improved. The plurality of battery cells 430 may be protected by the main frame. For example, when the battery pack is exposed to an external flame, the main frame may block or delay the battery cells 430 from being exposed to the flame or heat.

Referring to FIGS. 8 to 11, the battery pack according to an embodiment of the present disclosure may include a phase change material that fills the inside of the main frame. The phase change material (PCM, not shown) may fill the inside of the cell module assembly 400. For example, the phase change material may fill the inside of the first sub assembly 410 or the second sub assembly 420. Also, the phase change material may fill the inside of the first outer frame 411 or the first inner frame 412. Also, the phase change material may be filled between the plurality of battery cells 430. Also, the phase change material may fill the inside of the second outer frame 421 or the second inner frame 422.

The phase change material may exist in a solid form at room temperature. The phase change material may absorb heat and change into a liquid state. The phase change material may absorb heat and reduce or block heat transferred to the battery cell 430.

According to this configuration of the present disclosure, the thermal safety of the battery pack may be improved. As the phase change material absorbs heat, the heat transferred to the battery cell 430 may be reduced or blocked. In addition, the speed of heat transfer to the battery cell 430 may be delayed.

Referring to FIGS. 8 to 11, the phase change material of the battery pack according to an embodiment of the present disclosure may contain paraffin.

According to this configuration of the present disclosure, the thermal safety of the battery pack may be improved. By absorbing heat, paraffin may reduce or block heat transferred to the battery cell 430. Also, the speed of heat transfer to the battery cell 430 may be delayed.

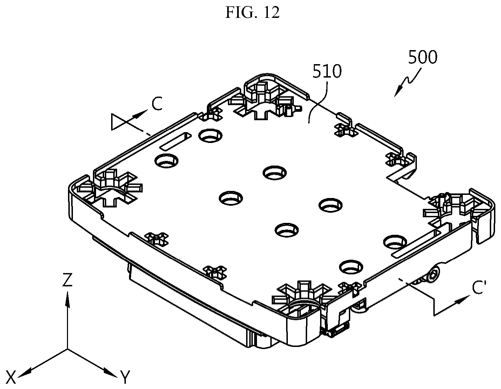

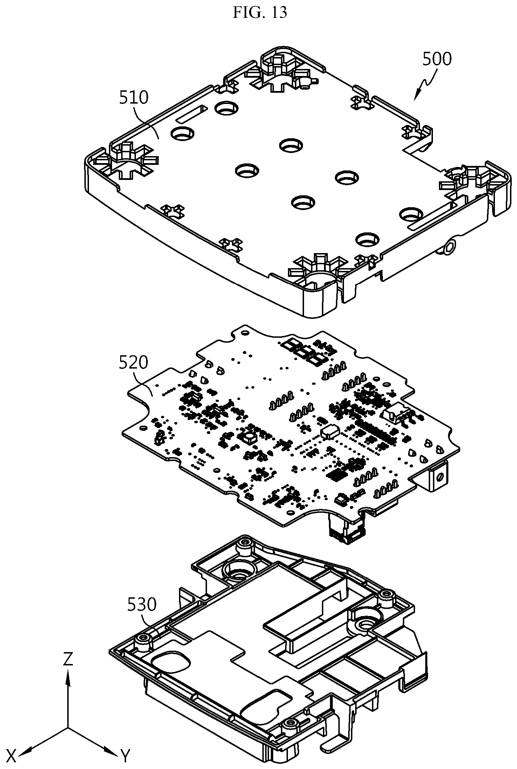

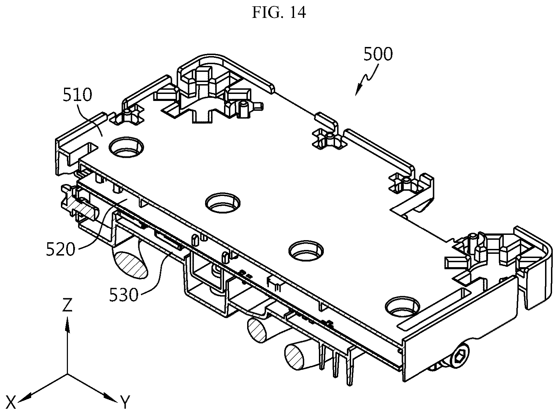

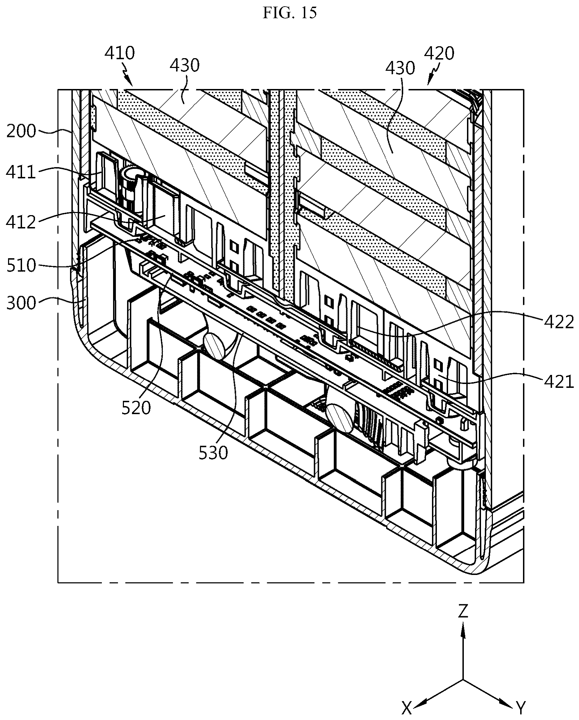

FIG. 12 is a diagram showing a controller 500 of the battery pack according to an embodiment of the present disclosure. FIG. 13 is a drawing showing the controller 500 of FIG. 12 in in which some components are exploded. FIG. 14 is a partial cross-sectional view, taken along the line C-C' of FIG. 12. FIG. 15 is a partial cross-sectional view, taken along the line A-A' of FIG. 1.

Referring to FIGS. 12 to 15, the battery pack according to an embodiment of the present disclosure may include a barrier. The controller 500 may include the barrier. The barrier may form an outer appearance of the controller 500. The barrier may have a rectangular parallelepiped shape. The barrier may cover the PCB 520. The PCB 520 may not be exposed to the outside due to the barrier. The barrier may be used to refer to an upper barrier 510 and a lower barrier 530 collectively.

According to this configuration of the present disclosure, the thermal safety of the battery pack may be improved. The plurality of battery cells 430 may be protected by the barrier and the PCB 520. For example, when the battery pack is exposed to an external flame, the barrier and the PCB 520 may block or delay the battery cells 430 from being exposed to the flame or heat.

Referring to FIGS. 12 to 15, the barrier according to an embodiment of the present disclosure may surround the PCB 520 entirely. The barrier may cover a lower surface and an upper surface of the PCB 520. Also, the barrier may function as a case that accommodates the PCB 520.

According to this configuration of the present disclosure, the thermal safety of the battery pack may be improved. Since the barrier covers the upper and lower surfaces of the PCB 520, respectively, the battery cell 430 may be more reliably blocked or delayed from being exposed to flame or heat.

Referring to FIGS. 12 to 15, the barrier of the battery pack according to an embodiment of the present disclosure may contain a PBT material. The PBT material may have strong durability against heat. In addition, the barrier may contain a glass fiber material. The glass fiber material may have strong durability against heat.

According to this configuration of the present disclosure, the flame resistance of the bottom cover 300 may be improved. As a result, the thermal safety of the battery pack may be improved.

Referring to FIGS. 12 to 15, the barrier of the battery pack according to an embodiment of the present disclosure may include an upper barrier 510 positioned between the plurality of battery cells 430 and the PCB 520 to cover the upper surface of the PCB 520.

According to this configuration of the present disclosure, the thermal safety of the battery pack may be improved. Since the barrier covers the upper surface of the PCB 520, the battery cell 430 may be more reliably blocked or delayed from being exposed to flame or heat.

Referring to FIGS. 12 to 15, the barrier of the battery pack according to an embodiment of the present disclosure may include a lower barrier 530 positioned between the bottom cover 300 and the PCB 520 to cover the lower surface of the PCB 520. The barrier may include an upper barrier 510 and a lower barrier 530.

According to this configuration of the present disclosure, the thermal safety of the battery pack may be improved. Since the barrier covers the lower surface of the PCB 520, the battery cell 430 may be more reliably blocked or delayed from being exposed to flame or heat.

Referring to FIGS. 12 to 15, the controller 500 of the battery pack according to an embodiment of the present disclosure may include the barrier, the PCB 520, and a wire assembly. The wire assembly may be provided on the lower surface of the lower barrier 530. The wire assembly may electrically connect the PCB 520 and input/output terminals of the battery pack, the battery cell 430, or various electronic components.

Referring to FIGS. 12 to 15, the battery pack according to an embodiment of the present disclosure may include a BMS provided on the PCB 520 and electrically connected to the plurality of battery cells 430. The BMS may be located on the PCB 520. The BMS may monitor information such as temperature or charge amount of the plurality of battery cells 430.

According to this configuration of the present disclosure, the thermal safety of the battery pack may be improved. In particular, when the lower portion of the battery pack is exposed to flame, the bottom cover 300, the lower barrier 530, the PCB 520 having the BMS, the upper barrier 510, the main frame, and the phase change material may block or delay the battery cell 430 from being exposed to flame or high heat.

**In** addition, when the battery pack according to the present disclosure may further include various components, for example components of the battery pack known at the time of filing of this application, such as a BMS, a bus bar, a relay, a current sensor, etc.

A transportation means according to the present disclosure may include the battery pack according to the present disclosure described above. The battery pack according to the present disclosure may be applied to electric scooters or vehicles such as electric vehicles or hybrid vehicles. In addition, the vehicle according to the present disclosure may further include various other components included in the scooter or vehicle, for example a body, a motor, and control devices such as an ECU (electronic control unit) in addition to the battery pack.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case having an open lower portion and providing an inner space;
a bottom cover coupled to the lower portion of the case;
a PCB accommodated within the case and positioned on the bottom cover; and
a plurality of battery cells accommodated within the case and positioned on the PCB.

2. The battery pack according to claim 1,
wherein the bottom cover contains a PBT material or glass fiber material.

3. The battery pack according to claim 1, further comprising:
a main frame accommodated within the case and positioned on the PCB,
wherein the plurality of battery cells are mounted to the main frame.

4. The battery pack according to claim 3, further comprising:
a phase change material that fills an inside of the main frame.

5. The battery pack according to claim 4,
wherein the phase change material contains paraffin.

6. The battery pack according to claim 1, further comprising:
a barrier configured to cover the PCB.

7. The battery pack according to claim 6,
wherein the barrier surrounds the PCB entirely.

8. The battery pack according to claim 6,
wherein the barrier contains a PBT material or glass fiber material.

9. The battery pack according to claim 6,
wherein the barrier includes an upper barrier located between the plurality of battery cells and the PCB to cover an upper surface of the PCB.

10. The battery pack according to claim 6,
wherein the barrier includes a lower barrier located between the bottom cover and the PCB to cover a lower surface of the PCB.

11. The battery pack according to claim 1, further comprising:
a BMS provided on the PCB and electrically connected to the plurality of battery cells.

12. A transportation means comprising the battery pack according to any one of claims 1 to 11.
